# EUROPÄISCHE PATENTSCHRIFT

(11) **EP 3 018 373 B1**
(45) Veröffentlichungstag und Bekanntmachung des Hinweises auf die Patenterteilung: **08.08.2018**
(21) Anmeldenummer: 15186299.2
(22) Anmeldetag: 22.09.2015
(51) Int. Cl.: F16C 32/04, F16C 25/00, F04D 19/04, F04D 29/058, F04D 29/64

(54) **VAKUUMPUMPE**
VACUUM PUMP
POMPE À VIDE

(30) Priorität: 07.11.2014 DE 102014116241
(43) Veröffentlichungstag der Anmeldung: 11.05.2016
(73) Patentinhaber: Pfeiffer Vacuum GmbH, 35614 Aßlar (DE)
(72) Erfinder: Jung, Hans-Jürgen, 35644 Hohenahr (DE)
(74) Vertreter: Knefel, Cordula

(56) Entgegenhaltungen:
- DE-A1- 2 825 551
- DE-A1- 10 022 061
- DE-A1- 10 043 235
- JP-A- 2014 134 168
- JP-U- S6 445 032

## Beschreibung

Die Erfindung betrifft eine Vakuumpumpe mit einem Rotor und einem Stator mit wenigstens einem Permanentmagnetlager.

Vakuumpumpen spielen in der Vakuumtechnik eine wichtige Rolle und werden in den unterschiedlichsten technischen Anwendungen zum Absaugen von vornehmlich gasförmigen Medien und zur Evakuierung von Hohlräumen eingesetzt. Dabei kommen unter anderem Turbomolekularpumpen zum Einsatz, welche im molekularen, das heißt nicht viskosen Bereich arbeiten und dazu geeignet sind, ein Vakuum mit einer sehr hohen Reinheit zu erzeugen. Turbomolekularpumpen umfassen üblicherweise eine Rotationseinheit, die aus einem Stator und einem gegenüber dem Stator drehbaren Rotor besteht, wobei der Rotor zur Erzeugung des hochreinen Vakuums mit üblicherweise sehr hohen Drehzahlen drehend angetrieben wird.

Bei diesen sehr hohen Drehzahlen kommt einer möglichst reibungsfreien Lagerung des Rotors gegenüber dem Stator eine besondere Bedeutung zu. Diese Lagerung wird üblicherweise durch zwei Lager erreicht, die ein im Bereich der Saugöffnung, das heißt der Hochvakuumseite der Pumpe angeordnetes Lager und ein in der Nähe der Gasaustrittsöffnung, das heißt der sogenannten Vorvakuumseite der Pumpe angeordnetes Lager umfassen.

Da das an der Hochvakuumseite vorgesehene Lager dabei mit dem zu evakuierenden Volumen in Verbindung steht, muss dieses Lager möglichst verschmutzungsfrei ausgeführt sein, um eine Verschmutzung des zu evakuierenden Volumens, beziehungsweise der darin enthaltenen Medien zu verhindern.

Um die Anforderungen an eine möglichst reibungsarme und gleichzeitig verschmutzungsfreie Lagerung zu erfüllen, ist es bekannt, das an der Hochvakuumseite vorgesehene Lager als Permanentmagnetlager auszuführen, welches beispielsweise einen an dem Stator angebrachten Magnetringstapel und einen an dem Rotor angebrachten Magnetringstapel umfassen kann, die ineinander angeordnet sind und durch ihre gegenseitige magnetische Abstoßung eine drehbare radiale Lagerung gewährleisten.

Zum Stand der Technik (DE 10 2012 216 450 A1) gehört eine derartige Vakuumpumpe, die einen an dem Stator angeordneten Magnetringstapel und einen im Rotor angeordneten Magnetringstapel aufweist. Diese Magnetringstapel sind korrespondierend zueinander angeordnet. Das heißt, die Magnetringe des Stators sind den Magnetringen des Rotor gegenüberliegend angeordnet. Dies ist erforderlich, um Exzentrizitäten oder Unwuchten zu vermeiden. Bei der Herstellung von Vakuumpumpen werden, um Unwuchten zu vermeiden, typischerweise Komponenten verwendet, die die vorgegebenen Spezifikationen, insbesondere hinsichtlich ihrer Geometrie und ihrer Massenverteilung und im Falle der Magnetringe, ihres magnetischen Verhaltens und insbesondere hinsichtlich der Rotationssymmetrie der vorgenannten Eigenschaften exakt, beziehungsweise im Rahmen von sehr engen Toleranzen erfüllen.

Hierzu ist es auch erforderlich, die Magnetringe des Stators und die Magnetringe des Rotors exakt gegenüberliegend anzuordnen. Aus der Praxis ist es bekannt, für die axiale Ausrichtung der Magnetringe im Stator Unterlegscheiben zu verwenden, um den Magnetringstapel in axialer Richtung derart ausrichten zu können, dass die Magnetringe des Stators und die Magnetringe des Rotors exakt gegenüberliegend angeordnet sind.

Diese Ausrichtung des Magnetringstapels des Stators ist jedoch relativ aufwendig, da hierzu die Vakuumpumpe, beziehungsweise das Permanentmagnetlager immer wieder demontiert werden muss, um die entsprechenden Distanzringe in entsprechender Dicke anzuordnen, bis die Ausrichtung der Magnetringe zueinander korrekt ist.

Zum Stand der Technik (DE 100 43 235 A1) gehört eine Vakuumpumpe mit einem Stator und einem Rotor mit Radialmagnetlagern und einem Axialmagnetlager. Innenhülsen der Radiallager sind durch Justierschrauben axial verstellbar. Um die Justierschraube verstellen zu können, ist es erforderlich, das Statorgehäuse zu öffnen, wodurch eine Justierung relativ aufwendig wird.

Weiterhin gehört zum Stand der Technik
(DE 100 22 061 A1) eine Magnetlagerung mit Dämpfung. Gemäß diesem Stand der Technik sind Justierschrauben für die Verstellung eines Trägers eines Ringpaketes vorgesehen. Auch bei diesem zum Stand der Technik gehörenden Magnetlager ist das Statorgehäuse zu öffnen, um die Justierschrauben verstellen zu können.

Weiterhin gehört zum Stand der Technik
(DE 28 25 551 A1) eine magnetische Lagerung, bei der eine Kraftmessdose auf eine Spindel wirkt, die wiederum mit einem Motor verstellbar ist. Diese Vorrichtung ist sehr aufwendig.

Zum Stand der Technik (JP-S-64-45032 U) gehört eine Vakuumpumpe mit einem Permanentmagnetlager, bei dem statorseitig ein Träger für wenigstens einen Magnetring vorgesehen ist und bei der der Träger mit dem wenigstens einen Magnetring als ein in axialer Richtung ohne Demontage des Lagers verstellbarer Träger ausgebildet ist. Diese zum Stand der Technik gehörende Vakuumpumpe weist den Nachteil auf, dass die Verstellvorrichtung ungeschützt ist vor Schmutz und Beschädigung.

Das der Erfindung zugrunde liegende technische Problem besteht darin, eine Vakuumpumpe anzugeben, bei der ein axiales Ausrichten des wenigstens einen Permanentmagnetringes in dem wenigstens einen Permanentmagnetlager der Vakuumpumpe in einfacher Art und Weise ausgeführt werden kann.

Dieses technische Problem wird durch eine Vakuumpumpe mit den Merkmalen gemäß Anspruch 1 gelöst.

Die erfindungsgemäße Vakuumpumpe mit einem Rotor und einem Stator mit wenigstens einem Permanentmagnetlager, welches zur gegenseitigen drehbaren Lagerung des Rotors und des Stators ausgebildet ist, und bei dem statorseitig ein Träger für wenigstens einen Magnetring vorgesehen ist und bei dem der Träger mit dem wenigstens einen Magnetring als ein in axialer Richtung ohne Demontage des Lagers verstellbarer Träger ausgebildet ist, zeichnet sich dadurch aus, dass der Träger ein Innengewinde aufweist und dass an einem statorseitigen Halteelement ein Flansch mit Außengewinde vorgesehen ist und dass der Träger an dem statorseitigen Flansch drehbar angeordnet ist und dass der Träger wenigstens eine Eingriffsöffnung aufweist und dass das statorseitige Halteelement wenigstens eine mit der wenigstens einen Eingriffsöffnung korrespondierende Durchgangsbohrung aufweist.

Die erfindungsgemäße Vakuumpumpe weist den Vorteil auf, dass der Träger mit dem wenigstens einen Magnetring in axialer Richtung verstellt werden kann, indem der Träger ohne Demontage der Pumpe von außerhalb des Stators zugänglich ist.

Durch die Zugänglichkeit von außen ist es nicht erforderlich, das Lager zu demontieren, das heißt, das Lager zu öffnen, indem der Stator mit dem wenigstens einen Permanentmagnetring oder dem Magnetringstapel entfernt wird.

Gemäß einer vorteilhaften Ausführungsform der Erfindung ist vorgesehen, dass der Träger mit dem wenigstens einen Magnetring als ein in axialer Richtung kontinuierlich verstellbarer Träger ausgebildet ist. Diese Ausführungsform weist den Vorteil auf, dass eine sehr exakte axiale Einstellung des wenigstens einen Magnetringes des Stators in Bezug zu dem wenigstens einen Magnetring des Rotors vorgenommen werden kann. Dies ist mit den aus der Praxis bekannten Unterlegscheiben nicht möglich.

Die Erfindung sieht vor, dass der Träger ein Innengewinde aufweist und dass an einem statorseitigen Halteelement ein Flansch mit Außengewinde vorgesehen ist und dass der Träger an dem statorseitigen Halteelement angeordnet ist. Durch diese Ausführungsform ist es möglich, den Träger kontinuierlich in axialer Richtung zu verstellen. Durch Drehen des Trägers findet eine axiale Bewegung des Trägers statt.

Hierdurch ist es möglich, eine hochgenaue Einstellung des wenigstens einen Permanentmagnetringes des Trägers in Bezug zu dem wenigstens einen Permanentmagnetring des Rotors vorzunehmen.

Vorteilhaft ist der Träger zylinderförmig ausgebildet. Hierdurch ist die erforderliche Rotationssymmetrie und eine einfache Anordnung des wenigstens einen Permanentmagnetringes auf dem Träger gegeben.

Gemäß der Erfindung ist vorgesehen, dass der Träger Eingriffsöffnungen aufweist und dass das statorseitige Halteelement mit den Eingriffsöffnungen korrespondierende Durchgangsbohrungen aufweist.

Durch die Erfindung ist es möglich, durch das statorseitige Halteelement beispielsweise mit einem Werkzeug in die Eingriffsöffnungen einzugreifen und den Träger zu drehen. Durch die Drehung erfährt der Träger mit den Magnetringen eine axiale Bewegung. Hierdurch ist eine hochgenaue Feineinstellung der Lage des wenigstens einen Permanentmagnetringes des Stators zu den Permanentmagnetringen des Rotors bei montiertem Rotor möglich.

Hierdurch zeichnet sich die Erfindung besonders aus, da die Vakuumpumpe komplett mit Stator und Rotor montiert wird. Der Rotor sitzt in den beiden Lagern, das heißt in dem hochvakuumseitigen Lager sowie in dem vorvakuumseitigen Lager. In diesem montierten Zustand kann der Träger mit dem wenigstens einen Permanentmagnetring axial bewegt werden, um den wenigstens einen Permanentmagnetring des Stators mit dem wenigstens einen Permanentring des Rotors in montiertem Zustand des Rotors zur Deckung zu bringen.

Gemäß einer weiteren vorteilhaften Ausführungsform der Erfindung ist vorgesehen, dass die Eingriffsöffnungen radialsymmetrisch über den Umfang des Trägers verteilt angeordnet sind. Hierdurch ist es in einfacher Art und Weise möglich, mit einem Werkzeug durch die Durchgangsbohrungen in die Eingriffsöffnungen einzugreifen.

Gemäß einer weiteren vorteilhaften Ausführungsform der Erfindung ist vorgesehen, dass die Durchgangsbohrungen als Langlöcher ausgebildet sind. Hierdurch ist gewährleistet, dass das Werkzeug in die Eingriffsöffnungen eingreifen kann und ein gewisser Bewegungsspielraum gegeben ist.

Vorteilhafterweise sind die Eingriffsöffnungen über den Umfang derart am Träger verteilt, dass unabhängig von der Stellung des Trägers zu dem statorseitigen Halteelement immer wenigstens eine Eingriffsöffnung im Bereich der Durchgangsbohrungen angeordnet ist.

Grundsätzlich besteht die Möglichkeit, lediglich eine Durchgangsbohrung und eine Eingriffsbohrung vorzusehen. Für die einfache Verstellbarkeit des Trägers zu dem statorseitigen Halteelement ist es jedoch vorteilhaft, wenigstens zwei Durchgangsbohrungen und wenigstens zwei Eingriffsöffnungen vorzusehen. Vorteilhaft sind drei Durchgangsbohrungen vorgesehen und eine Vielzahl von Eingriffsöffnungen.

Die Eingriffsöffnungen können als Nuten oder Bohrungen oder dergleichen ausgebildet sein.

Gemäß einer weiteren vorteilhaften Ausführungsform der Erfindung ist vorgesehen, dass zur Fixierung des Trägers in dem Halteelement wenigstens eine Feststellvorrichtung vorgesehen ist. Ist der wenigstens eine Permanentmagnet des Stators zur Deckung mit dem wenigstens einen Permanentmagneten des Rotors gebracht, wird der Träger in dem statorseitigen Halteelement mittels der wenigstens einen Feststellvorrichtung fixiert. Diese Feststellvorrichtung kann beispielsweise als Madenschraube ausgebildet sein. Andere Feststellvorrichtungen sind jedoch auch möglich.

Gemäß einer weiteren vorteilhaften Ausführungsform der Erfindung weisen der Rotor und der Stator jeweils wenigstens einen permanentmagnetischen Ring auf. Vorteilhaft ist vorgesehen, dass der Rotor und der Stator jeweils einen permanentmagnetischen Ringstapel aufweist. Es kommt hierbei auf die Ausgestaltung der Vakuumpumpe mit dem Rotor und dem Stator an, ob ein Ring ausreicht, oder ob ein Ringstapel erforderlich ist.

Die Rotoringe und/oder Statorringe können zum Beispiel einen im Wesentlichen zylindermantelförmigen Ringstapel des Rotors oder des Stators bilden, in dem die jeweiligen Ringe im Wesentlichen konzentrisch und bevorzugt koaxial übereinander gestapelt sind. Der Ringstapel des Rotors und der Ringstapel des Stators sind dabei vorzugsweise im Wesentlichen koaxial ineinander angeordnet, wobei zwischen den beiden Ringstapeln ein Spalt des Magnetlagers ausgebildet ist. Dabei stehen sich im Bereich des Stapels bevorzugt gleiche Pole des Rotors und des Stators gegenüber, das heißt der statorseitige Teil des Lagers und der rotorseitige Teil des Lagers sind über abstoßende magnetische Kräfte miteinander gekoppelt.

Das Permanentmagnetlager weist vorzugsweise einen aus Samarium-Cobalt oder Neodym-Eisen-Bor gebildeten, beziehungsweise Samarium-Cobalt und/oder Neodym-Eisen-Bor enthaltenen Permanentmagneten auf, beispielsweise einen oder mehrere stator- oder rotorseitige Permanentmagnetringe, die zumindest eines der Materialien Samarium-Cobalt, Neodym-Eisen-Bor oder ein Ferrit auf Strontiumferritbasis oder auf Bariumferritbasis oder eine Kombination dieser Materialien enthalten, oder aus einem oder mehreren dieser Materialien gebildet sind. Die vorstehend genannten Materialien sind besonders geeignet, um die für die Lagerung erforderlichen magnetischen Lagerkräfte zu erzeugen.

Durch die Erfindung ist es möglich, den wenigstens einen Magnetring des Stators und den wenigstens einen Magnetring des Rotors derart gegenüberliegend anzuordnen, dass die abstoßenden magnetischen Kräfte maximal wirken, wodurch eine optimierte Lagerung ohne Unwuchten erreicht wird.

Gemäß einer weiteren vorteilhaften Ausführungsform der Erfindung ist vorgesehen, dass im Inneren des Trägers wenigstens ein Fanglager angeordnet ist.

Gemäß einer vorteilhaften Ausführungsform der Erfindung ist das Fanglager als Wälzlager, vorteilhaft als Kugellager ausgebildet. Dieses als Wälzlager ausgebildete Lager verbindet das statorseitige Halteelement mit einer als Anschlag dienenden Fanghülse. Der Rotor weist vorteilhaft einen Zapfenabschnitt auf, der sich in die Fanghülse hinein erstreckt. Zwischen der Fanghülse und dem Zapfenabschnitt ist im Ruhezustand beziehungsweise gleichlaufenden Betrieb der Pumpe ein den gesamten Drehwinkel abdeckender Spalt ausgebildet, so dass die Fanghülse und der Zapfenabschnitt sich in diesem Zustand nicht berühren und der Rotor außer Eingriff mit dem Kugellager steht. Erst bei einer radialen Auslenkung des Rotors berühren sich Fanghülse und Zapfenabschnitt, so dass der Rotor mit dem Kugellager in Eingriff gelangt und das Kugellager mit der Fanghülse einen Anschlag für den Rotor bildet, der eine Kollision der Magnetringstapel verhindert. Der Spalt in dem Fanglager kann hierzu eine geringere radiale Spaltweite aufweisen als der Spalt, der zwischen den Permanentmagnetringen des Stator und des Rotors ausgebildet wird. Da der durch das Kugellager gebildete Anschlag eine drehende Relativbewegung des Rotors zulässt, wird eine abrupte Abbremsung des Rotors bei dem Eingreifen des Fanglagers vermieden. Gemäß einer vorteilhaften Ausführungsform der Erfindung ist vorgesehen, dass das Kugellager als ölfreies Kugellager ausgebildet ist. Das heißt, das Kugellager ist als nicht geschmiertes Kugellager ausgebildet, so dass eine Verschmutzung des durch die Pumpe erzeugten Vakuums durch das Kugellager ausgeschlossen ist.

Die erfindungsgemäße Vakuumpumpe ist vorteilhaft als Turbomolekularpumpe ausgebildet.

Die Funktion des Permanentmagnetlagers beruht auf den von den Statorringen und Rotorringen erzeugten, einander entgegengesetzten magnetischen Feldern und den dadurch erzeugten in radialer Richtung orientierten magnetischen Abstoßungskräften zwischen den Statorringen und den Rotorringen. Die Lagerkräfte in Form dieser radialen magnetischen Abstoßungskräfte bewirken eine drehbare radiale Lagerung des Rotors gegenüber dem Stator. Nicht exakt ausgerichtete Permanentmagnete im Stator und im Rotor führen dazu, dass eine Exzentrizität auftritt, die bei dem Betrieb der Pumpe Vibrationen erzeugt, die den Verschleiß der Pumpe erhöhen, deren Betriebssicherheit beeinträchtigen und die maximal zulässige Drehzahl der Pumpe herabsetzen.

Weitere Merkmale und Vorteile der Erfindung ergeben sich anhand der zugehörigen Zeichnung, in der ein Ausführungsbeispiel einer erfindungsgemäßen Vakuumpumpe nur beispielhaft dargestellt ist. In der Zeichnung zeigen:
- Fig. 1: eine Vakuumpumpe in perspektivischer Darstellung;
- Fig. 2: einen Axialschnitt, der in Fig. 1 gezeigten Vakuumpumpe gemäß dem Stand der Technik;
- Fig. 3: eine geschnittene Detailansicht des Magnetlagers gemäß dem Stand der Technik;
- Fig. 4: eine geschnittene Detailansicht des statorseitigen Halteelementes des Magnetlagers;
- Fig. 5: eine Ansicht in Richtung des Pfeiles V der Fig. 4.

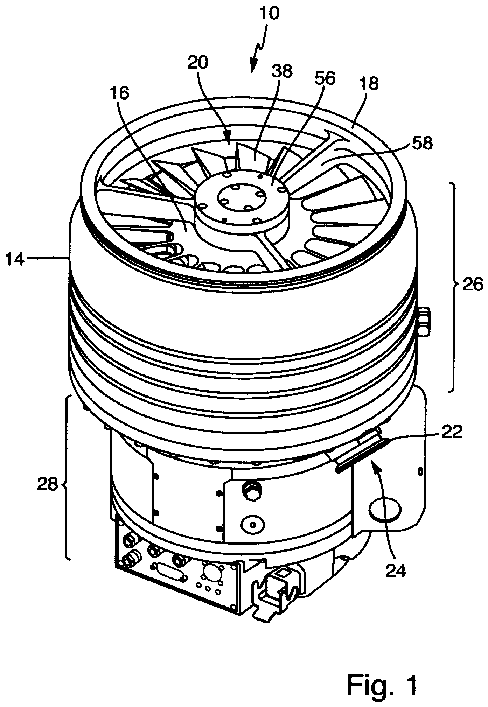

Fig. 1 zeigt eine als Turbomolekularpumpe ausgebildete Vakuumpumpe 10 in perspektivischer Ansicht.

Die Vakuumpumpe 10 umfasst einen Stator, welcher einen Teil eines mehrteiligen Pumpengehäuses 14 umfasst, sowie einen Rotor 16, der gegenüber dem Stator drehend antreibbar gelagert ist.

Die Vakuumpumpe 10 umfasst an ihrer Hochvakuumseite eine von einem Saugflansch 18 umgebene Ansaugöffnung 20 zur Verbindung mit einem zu evakuierenden Volumen und eine im Bereich der Vorvakuumseite der Vakuumpumpe 10 angeordnete, von einem Vorvakuumflansch 22 umgebene Gasaustrittsöffnung 24 zur Verbindung mit einem Vorvakuum.

Der Stator und der Rotor 16 bilden zusammen eine Rotationseinheit 26 der Vakuumpumpe 10, die mit einem Basisabschnitt, beziehungsweise Unterteil 28 der Pumpe 10 lösbar verbunden ist.

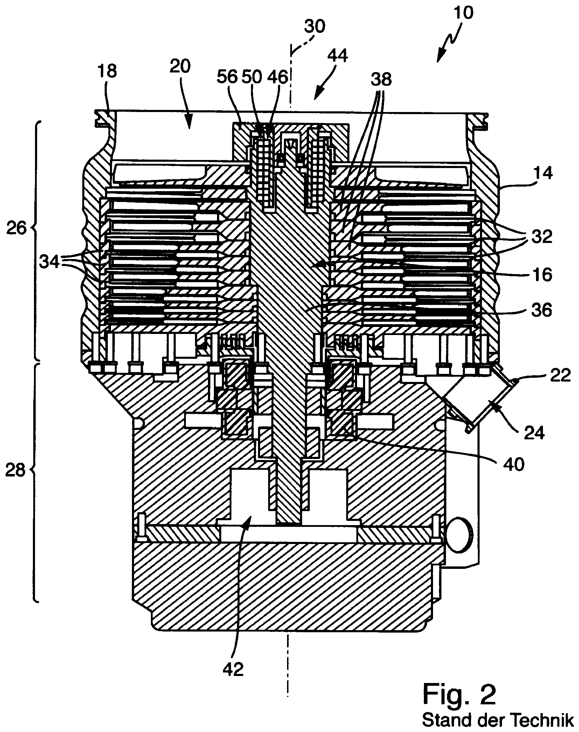

Fig. 2 zeigt die Vakuumpumpe 10 der Fig. 1 in einer entlang ihrer Rotationsachse 30 teilweise geschnittenen Ansicht. Der Stator umfasst mehrere Statorscheiben 32, die in dem Gehäuse 14 angeordnet und über Distanzelemente 34 in einem definierten Abstand voneinander gehalten sind.

Der Rotor 16 umfasst eine Rotorwelle 36, welche mehrere Rotorscheiben 38 trägt, wobei jeweils eine Rotorscheibe 38 in dem Zwischenraum zwischen zwei Statorscheiben 32 angeordnet ist. Die Statorscheiben 32 und Rotorscheiben 38 weisen jeweils eine mehrere Schaufeln umfassende pumpaktive Struktur auf, so dass eine Statorscheibe 32 jeweils mit der benachbarten Rotorscheibe 38 eine Pumpstufe der Turbomolekularpumpe 10 bildet. In dem Unterteil 28 ist eine Antriebseinheit 40 angeordnet, die beispielsweise einen Elektromotor umfassen kann und mit der der Rotor 16 zur Bereitstellung der Pumpwirkung drehend antreibbar ist.

Ferner weist die Pumpe 10 ein vorvakuumseitiges Lager 42 auf, welches zur drehbaren Lagerung des Rotors 16 gegenüber dem Unterteil 28 und dem damit verbundenen Stator ausgebildet ist. Das vorvakuumseitige Lager 42 ist dazu eingerichtet, radiale und axiale Lagerkräfte aufzunehmen und ist vorliegend als geschmiertes Wälzlager ausgebildet.

An ihrer Hochvakuumseite weist die Pumpe 10 ein weiteres in Fig. 2 zum Stand der Technik gehörendes, als Permanentmagnetlager ausgebildetes Lager 44 auf, das eine rotorseitige Lagerhälfte und eine statorseitige Lagerhälfte umfasst und dass eine drehbare Lagerung des Rotors 16 gegenüber dem Stator bewirkt.

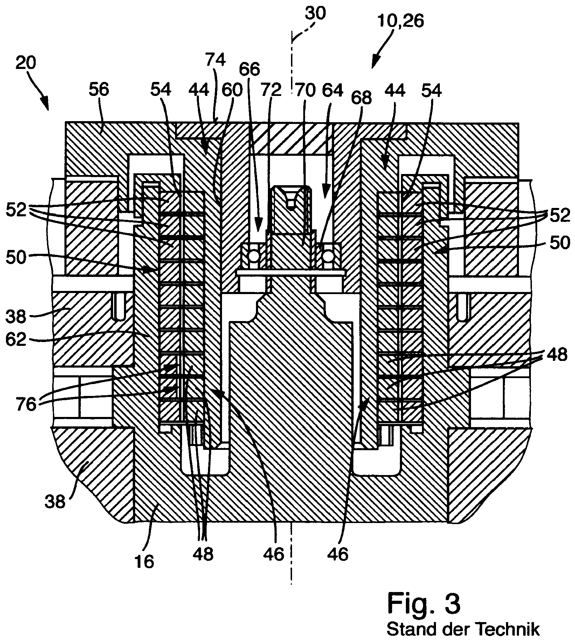

Fig. 3 zeigt das zum Stand der Technik gehörende Permanentlager 44. Das Lager 44 umfasst einen statorseitigen Magnetringstapel 46 aus mehreren Statormagnetringen 48 und einen rotorseitigen Magnetringstapel 56 aus mehreren Rotormagnetringen 52. Die Magnetringe 48, 52 eines Stapels 46, 50 sind dabei in axialer Richtung aufeinander gestapelt und bilden eine zumindest näherungsweise zylindermantelförmige Grundform des jeweiligen Stapels 46, 50. Der stapelseitige Magnetringstapel 46 und der rotorseitige Magnetringstapel 50 sind dabei jeweils im Wesentlichen koaxial zu der Rotationsachse 30 der Pumpe 10 angeordnet, wobei der statorseitige Stapel 46 so innerhalb des rotorseitigen Stapels 50 angeordnet ist, dass die radialen Außenseiten der Rotorringe 48 den radialen Innenseiten der Statorringe 52 gegenüberliegen und zwischen diesen ein zumindest näherungsweise zylindermantelförmiger Spalt 54 mit einer geringen durch die radiale Erstreckung des Spaltes 44 gebildeten Spaltweite ausgebildet ist.

Der Stator weist einen Trägerabschnitt 56 auf, der in der Mitte der Ansaugöffnung 20 angeordnet ist und im Ausführungsbeispiel, wie in Fig. 1 gezeigt, über mehrere in der Ansaugöffnung 20 angeordnete radiale Streben 58 mit dem Gehäuse 14 verbunden ist. Der Trägerabschnitt 56 umfasst einen, sich in axialer Richtung erstreckenden, im Wesentlichen zylindermantelförmigen Halteabschnitt 60, der sich in das Innere des statorseitigen Stapels 46 hinein erstreckt, wobei die Statorringe 46 mit ihren radialen Innenseiten jeweils an der radialen Außenseite des Halteabschnittes 60 anliegen und von diesen gehalten werden. Der Rotor 16 weist ebenfalls einen im Wesentlichen zylindermantelförmigen Halteabschnitt 62 auf, wobei die Rotorringe 52 mit ihren radialen Außenseiten an der radialen Innenseite des Halteabschnittes 62 anliegen und von diesen gehalten werden. Die Pumpe 10 weist ferner ein Fanglager 64 auf, welches einen drehbaren Anschlag für den Rotor 16 bildet und eine radiale Bewegung des Stators und des Rotors 16 relativ zueinander begrenzt, die zum Bespiel durch vom auf die Pumpe 10 einwirkende Stöße oder während des Betriebes der Pumpe 10 auftretende Vibration hervorgerufen wird. Dadurch wird verhindert, dass die Ringe 48, 52 der beiden Stapel 46, 50 in Folge einer solchen radialen Relativbewegung mechanisch miteinander in Kontakt geraten und das Permanentmagnetlager 44 beschädigt wird.

Das Fanglager 64 umfasst eine im Inneren des Permanentmagnetlagers 44 angeordnetes, als Kugellager ausgebildetes Wälzlager 66, welches dem Trägerabschnitt 56 drehbar mit einer als Anschlag dienenden Fanghülse 68 verbindet. Der Rotor 16 weist einen Zapfenabschnitt 70 auf, der sich in die Fanghülse 68 hinein erstreckt. Zwischen der Fanghülse 68 und dem Zapfenabschnitt 70 ist im Ruhezustand, beziehungsweise gleichlaufenden Betrieb der Pumpe 10 ein den gesamten Drehwinkel abdeckender Spalte 72 ausgebildet, so dass die Fanghülse 68 und der Zapfenabschnitt 70 sich in diesem Zustand nicht berühren und der Rotor 16 außer Eingriff mit dem Kugellager 66 steht. Erst bei einer radialen Auslenkung des Rotors 16 berühren sich Fanghülse 68 und Zapfenabschnitt 70, so dass der Rotor 16 mit dem Kugellager 66 in Eingriff gelangt und das Kugellager 66 mit der Fanghülse 68 einen Anschlag für den Rotor 16 bildet, der eine Kollision der Magnetringstapel 46, 50 verhindert. Der Spalt 72 kann dazu eine geringere radiale Spaltweise aufweisen als der Spalt 54. Da der durch das Kugellager 66 gebildete Anschlag eine drehende Relativbewegung des Rotors zulässt, wird eine abrupte Abbremsung des Rotors 16 bei dem Eingreifen des Fanglagers 64 vermieden. Das Kugellager 66 ist als nicht geschmiertes Kugellager 66 ausgebildet, so dass eine Verschmutzung des durch die Pumpe 10 erzeugten Vakuums durch das Kugellager 66 ausgeschlossen ist.

Die Funktion des Permanentmagnetlagers 44 beruht auf den von den Statorringen 48 und Rotorringen 52 erzeugten, einander entgegengesetzten magnetischen Feldern und den dadurch erzeugten, in radialer Richtung orientierten magnetischen Abstoßungskräften zwischen den Statorringen 48 und den Rotorringen 52. Die Lagerkräfte in Form dieser radialen magnetischen Abstoßungskräfte bewirken eine drehbare Lagerung des Rotors 16 gegenüber dem Stator. Eine bezogen auf die Rotationsachse 30 nicht perfekt rotationssymmetrische Verteilung dieser Lagerkräfte, beziehungsweise der ursächlichen magnetischen Felder sowie eine nicht perfekt rotationssymmetrische Massenverteilung des Rotors 16 führen dabei zu einer Exzentrizität der Pumpe 10, welche bei dem Betrieb der Pumpe 10 Vibrationen erzeugt, die den Verschleiß der Pumpe 10 erhöhen, deren Betriebssicherheit beeinträchtigen und die maximal zulässige Drehzahl der Pumpe 10 herabsetzt.

Der Halteabschnitt 60 ist in einem Halteelement 74 angeordnet.

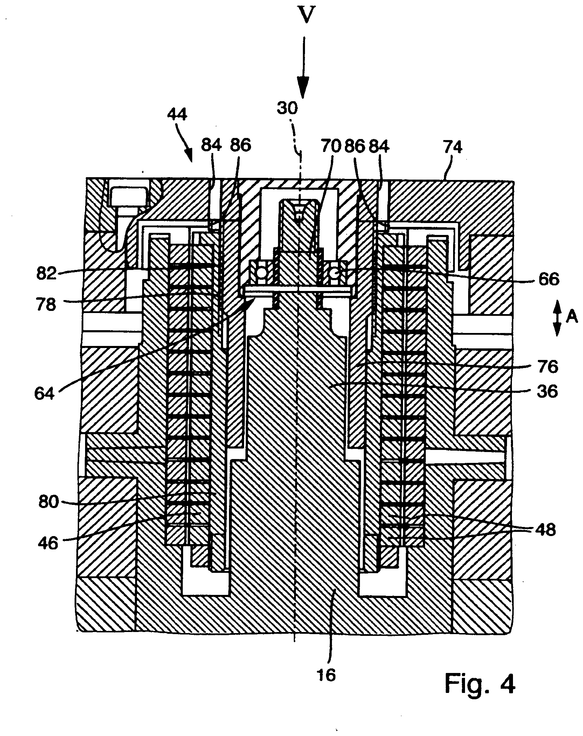

Gemäß Fig. 4 ist das Halteelement 74 dargestellt.

Das Halteelement 74 weist einen Flansch 76 auf, welches ein Außengewinde 78 trägt. Darüber hinaus ist ein Träger 80 vorgesehen, der die Magnetringe 48 trägt. Der Träger 80 weist ein Innengewinde 82 auf, welches mit dem Außengewinde 78 des Flansches 76 des Halteelementes 74 in Eingriff steht. Wird der Träger 80 gedreht, erfährt der Träger eine axiale Bewegung in Richtung des Doppelpfeiles A, je nachdem in welche Richtung der Träger 80 gedreht wird. Hierdurch ist es möglich, die Permanentmagnete 48 des Stators radial genau gegenüberliegend zu den Permanentmagneten 50 des Rotors auszurichten.

In dem Träger 80 ist das Fanglager 64 angeordnet, welches das Kugellager 66 aufweist. Die Funktion des Fanglagers 64 ist zur Fig. 3 beschrieben worden.

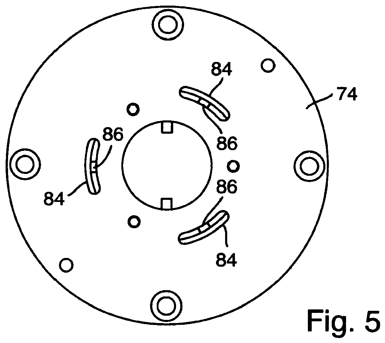

Wie in den Fig. 4 und 5 dargestellt, weist das Halteelement 74 Durchgangsbohrungen 84 in Form von Langlöchern auf. Durch diese Durchgangsbohrungen 84 kann ein Werkzeug geführt werden, welches mit Eingriffsöffnungen 86 in Eingriff kommt. Hierdurch ist es möglich, ohne Demontage des Halteelementes 75, das heißt in der dargestellten, montierten Version des Rotors mit dem Stator und der rotorseitigen und statorseitigen Permanentmagnetlager, den Träger 80 relativ zu dem Halteelement 74 zu verdrehen und damit eine axiale Bewegung in Richtung des Doppelpfeiles A zu bewirken.

Die Eingriffsöffnungen 86 sind radialsymmetrisch in dem Träger 80 verteilt angeordnet. Wie in Fig. 5 dargestellt, ist im Bereich der Langlöcher 84 jeweils eine Eingriffsöffnung 86 angeordnet, so dass auf jeden Fall mit einem Werkzeug der Träger 80 über die Eingriffsöffnungen 86 verdreht werden kann. Das Werkzeug weist vorteilhaft drei Stäbe auf, die in den Eingriffsöffnungen 86 anordbar sind.

Zur Fixierung des Trägers 80 in dem Halteelement 74 sind Madenschrauben vorgesehen, die nach axialer Ausrichtung des Trägers 80 in dem Halteelement 74 angeordnet werden und den Träger 80 relativ zu dem Halteelement 74 fixieren.

### Bezugszahlen

- 10: Vakuumpumpe
- 14: Gehäuse
- 16: Rotor
- 18: Saugflansch
- 20: Ansaugöffnung
- 22: Vorvakuumflansch
- 24: Gasaustrittsöffnung
- 26: Rotationseinheit
- 28: Unterteil
- 30: Rotationsachse
- 32: Statorscheiben
- 34: Distanzelement
- 36: Rotorwelle
- 38: Rotorscheibe
- 40: Antriebseinheit
- 42: Kugellager
- 44: Permanentmagnetlager
- 46: statorseitiger Magnetringstapel
- 48: statorseitiger Magnetring
- 50: rotorseitiger Magnetringstapel
- 52: rotorseitiger Magnetring
- 54: Spalt
- 56: Trägerabschnitt
- 58: Strebe
- 60: Halteabschnitt
- 62: Halteabschnitt
- 64: Fanglager
- 66: Kugellager
- 68: Fanghülse
- 70: Zapfenabschnitt
- 72: Spalt
- 74: Halteelement
- 76: Flansch
- 78: Außengewinde
- 80: Träger
- 82: Innengewinde
- 84: Durchgangsbohrung
- 86: Eingriffsöffnungen
- A: Doppelpfeil

## Patentansprüche

1. Vakuumpumpe (10) mit einem Rotor (16) und einem Stator mit wenigstens einem Permanentmagnetlager (44), welches zur gegenseitigen drehbaren Lagerung des Rotors (16) und des Stators ausgebildet ist, und bei dem statorseitig ein Träger (80) für wenigstens einen Magnetring (48) vorgesehen ist, wobei der Träger (80) mit dem wenigstens einen Magnetring (48) als ein in axialer Richtung ohne Demontage des Lagers (44) verstellbarer Träger (80) ausgebildet ist, **dadurch gekennzeichnet , dass** der Träger (80) ein Innengewinde (82) aufweist, und dass an einem statorseitigen Halteelement (74) ein Flansch (76) mit Außengewinde (78) vorgesehen ist, und dass der Träger (80) an dem statorseitigen Flansch (76) drehbar angeordnet ist und dass der Träger (80) wenigstens eine Eingriffsöffnung (86) aufweist und dass das statorseitige Halteelement (74) wenigstens eine mit der wenigstens einen Eingriffsöffnung (86) korrespondierende Durchgangsbohrung (84) aufweist.

2. Vakuumpumpe nach Anspruch 1, **dadurch gekennzeichnet, dass** der Träger (80) mit dem wenigstens einen Magnetring (48) als ein in axialer Richtung kontinuierlich verstellbarer Träger (80) ausgebildet ist.

3. Vakuumpumpe nach einem der vorhergehenden Ansprüche, **dadurch gekennzeichnet, dass** der Träger (80) zylinderförmig ausgebildet ist.

4. Vakuumpumpe nach Anspruch 1, **dadurch gekennzeichnet, dass** wenigstens zwei Durchgangsbohrungen (84) und wenigstens zwei Eingriffsöffnungen (86) vorgesehen sind für die einfache Verstellbarkeit des Trägers zu dem statorseitigen Halteelement und dass die Eingriffsöffnungen (86) radialsymmetrisch über einen Umfang des Trägers (80) verteilt angeordnet sind.

5. Vakuumpumpe nach Anspruch 1, **dadurch gekennzeichnet, dass** die wenigstens eine Durchgangsbohrung (84) als Langloch ausgebildet ist.

6. Vakuumpumpe nach einem der vorhergehenden Ansprüche, **dadurch gekennzeichnet, dass** zur Fixierung des Trägers (80) in dem Halteelement (74) wenigstens eine Feststellvorrichtung vorgesehen ist.

7. Vakuumpumpe nach einem der vorhergehenden Ansprüche, **dadurch gekennzeichnet, dass** der Rotor (16) und der Stator (18) jeweils wenigstens einen permanentmagnetischen Ring (48, 52) aufweist.

8. Vakuumpumpe nach einem der vorhergehenden Ansprüche, **dadurch gekennzeichnet, dass** der Rotor (16) und der Stator (18) jeweils einen permanentmagnetischen Ringstapel (46, 50) aufweist.

9. Vakuumpumpe nach einem der vorhergehenden Ansprüche, **dadurch gekennzeichnet, dass** im Inneren des Trägers (80) wenigstens ein Fanglager (64) angeordnet ist.

10. Vakuumpumpe nach Anspruch 9, **dadurch gekennzeichnet, dass** das Fanglager (64) als Wälzlager (66) ausgebildet ist.

11. Vakuumpumpe nach Anspruch 10, **dadurch gekennzeichnet, dass** das Wälzlager (66) als ölfreies Wälzlager ausgebildet ist.

12. Vakuumpumpe nach einem der vorhergehenden Ansprüche, **dadurch gekennzeichnet, dass** die Vakuumpumpe (10) als Turbomolekularpumpe ausgebildet ist.

## Claims

1. A vacuum pump (10) with a rotor (16) and a stator with at least one permanent magnet bearing (44), which is configured for the mutual rotational mounting of the rotor (16) and the stator, and in which there is provided at the stator side a carrier (80) for at least one magnetic ring (48), wherein the carrier (80) with the at least one magnet ring (48) is configured as a carrier (80) which is adjustable in the axial direction without disassembly of the bearing (44), **characterised in that** the carrier (80) has an internal thread (82), and **in that** a flange (76) with an external thread (78) is provided on a stator-side holding element (74), and **in that** the carrier (80) is arranged rotatably on the stator-side flange (76) and **in that** the carrier (80) has at least one engagement opening (86) and **in that** the stator-side holding element (74) has at least one through hole (84) corresponding to the at least one engagement opening (86).

2. A vacuum pump according to claim 1, **characterised in that** the carrier (80) with the at least one magnet ring (48) is configured as a carrier (80) which is continuously adjustable in the axial direction.

3. A vacuum pump according to one of the preceding claims, **characterised in that** the carrier (80) is cylindrical.

4. A vacuum pump according to claim 1, **characterised in that** at least two through holes (84) and at least two engagement openings (86) are provided for the simple adjustability of the carrier to the stator-side holding element and **in that** the engagement openings (86) are arranged distributed radially symmetrically over a periphery of the carrier (80).

5. A vacuum pump according to claim 1, **characterised in that** the at least one through hole (84) is formed as an elongate hole.

6. A vacuum pump according to one of the preceding claims, **characterised in that** at least one securing device is provided for the fixing of the carrier (80) in the holding element (74).

7. A vacuum pump according to one of the preceding claims, **characterised in that** the rotor (16) and the stator (18) each comprise at least one permanently magnetic ring (48, 52).

8. A vacuum pump according to one of the preceding claims, **characterised in that** the rotor (16) and the stator (18) each comprise a permanently magnetic ring stack (46, 50).

9. A vacuum pump according to one of the preceding claims, **characterised in that** the interior of the carrier (80) there is disposed at least one safety bearing (64).

10. A vacuum pump according to claim 9, **characterised in that** the safety bearing (64) is formed as a roller bearing (66).

11. A vacuum pump according to claim 10, **characterised in that** the roller bearing (66) is an oil-free roller bearing.

12. A vacuum pump according to one of the preceding claims, **characterised in that** the vacuum pump is a turbomolecular pump.

## Revendications

1. Pompe à vide (10) comprenant un rotor (16) et un stator avec au moins un palier à aimant permanent (44), qui est réalisé en vue de supporter de manière mutuellement rotative le rotor (16) et le stator, et au niveau duquel, du côté du stator, un support (80) pour au moins une bague magnétique (48) est prévu, le support (80) étant réalisé avec l'au moins une bague magnétique (48) sous forme de support (80) réglable selon une direction axiale sans démontage du palier (44), **caractérisée en ce que** le support (80) présente un filetage intérieur (82) et **en ce qu'**au niveau d'un élément de retenue (74) du côté du stator est prévue une bride (76) avec un filetage extérieur (78), et **en ce que** le support (80) est disposé de manière rotative sur la bride (76) du côté du stator, et **en ce que** le support (80) présente au moins une ouverture d'engagement (86) et **en ce que** l'élément de retenue (74) du côté du stator présente au moins un alésage traversant (84) correspondant à l'au moins une ouverture d'engagement (86).

2. Pompe à vide selon la revendication 1, **caractérisée en ce que** le support (80) est réalisé avec l'au moins une bague magnétique (48) sous forme de support (80) réglable en continu dans la direction axiale.

3. Pompe à vide selon l'une quelconque des revendications précédentes, **caractérisée en ce que** le support (80) est réalisé sous forme cylindrique.

4. Pompe à vide selon la revendication 1, **caractérisée en ce qu'**au moins deux alésages traversants (84) et au moins deux ouvertures d'engagement (86) sont prévus pour une capacité de réglage simple du support par rapport à l'élément de retenue du côté du stator et **en ce que** les ouvertures d'engagement (86) sont disposées de manière réparties avec une symétrie radiale sur une périphérie du support (80).

5. Pompe à vide selon la revendication 1, **caractérisée en ce que** l'au moins un alésage traversant (84) est réalisé sous forme de trou oblong.

6. Pompe à vide selon l'une quelconque des revendications précédentes, **caractérisée en ce que** pour la fixation du support (80) dans l'élément de retenue (74), il est prévu au moins un dispositif de fixation.

7. Pompe à vide selon l'une quelconque des revendications précédentes, **caractérisée en ce que** le rotor (16) et le stator (18) présentent chacun au moins une bague à aimantation permanente (48, 52) .

8. Pompe à vide selon l'une quelconque des revendications précédentes, **caractérisée en ce que** le rotor (16) et le stator (18) présentent chacun un empilement de bagues à aimantation permanente (46, 50).

9. Pompe à vide selon l'une quelconque des revendications précédentes, **caractérisée en ce qu'**à l'intérieur du support (80) est disposé au moins un palier d'arrêt (64).

10. Pompe à vide selon la revendication 9, **caractérisée en ce que** le palier d'arrêt (64) est réalisé sous forme de palier à roulement (66).

11. Pompe à vide selon la revendication 10, **caractérisée en ce que** le palier à roulement (66) est réalisé sous forme de palier à roulement sans huile.

12. Pompe à vide selon l'une quelconque des revendications précédentes, **caractérisée en ce que** la pompe à vide (10) est réalisée sous forme de pompe turbomoléculaire.
